# FASCICULE DE BREVET EUROPEEN

(11) **EP 2 571 706 B1**
(45) Date de publication et mention de la délivrance du brevet: **13.07.2016**
(21) Numéro de dépôt: 11725973.9
(22) Date de dépôt: 20.05.2011
(51) Int. Cl.: B60J 10/00

(54) **ARMATURE THERMOPLASTIQUE POUR PROFILÉ D'ÉTANCHÉITÉ OU D'ENJOLIVEUR DE VÉHICULE AUTOMOBILE, SON PROCÉDÉ DE FABRICATION ET CE PROFILÉ L'INCORPORANT**
THERMOPLASTISCHE ARMIERUNG FÜR KFZ-DICHTUNG ODER ZIERLEISTE, DAZUGEHÖRIGE DICHTUNG UND ZIERLEISTE UND DAZUGEHÖRIGES FERTIGUNGSVERFAHREN
THERMOPLASTIC ARMATURE FOR VEHICLE SEALING OR DECORATION STRIP, CORRESPONDING SEALING AND DECORATION STRIP AND MANUFACTURING PROCESS

(30) Priorité: 20.05.2010 FR 1002130
(43) Date de publication de la demande: 27.03.2013
(73) Titulaire: Hutchinson, 75008 Paris (FR)
(72) Inventeur: BARATIN, Sylvain, F-45120 Corquilleroy (FR); CHAPEAU, Philippe, F-45260 La Cour Marigny (FR); CHARLES, Mikaël, F-45680 Dordives (FR)
(74) Mandataire: Gevers & Orès
(86) Numéro de dépôt international: PCT/IB2011/052215
(87) Numéro de publication internationale: WO 2011/145079

(56) Documents cités:
- EP-A1- 0 418 116
- EP-A1- 0 710 788
- EP-A1- 1 093 902
- DE-A1- 10 338 195
- FR-A5- 2 145 928
- FR-A5- 2 187 076
- US-A- 5 686 165

## Description

La présente invention concerne une armature thermoplastique cintrable en particulier pour profilé d'étanchéité ou d'enjoliveur de véhicule automobile, un tel profilé l'incorporant et un procédé de fabrication de cette armature. L'invention s'applique notamment à de tels profilés qui sont aptes à être fixés sur une feuillure de cadre et qui forment des joint d'ouvrants latéraux ou avant/ arrière de véhicules automobiles de type tourisme, utilitaires ou poids-lourds, comme par exemple les joints d'entrée de porte latérale, les joints de coffre, de hayon ou de porte arrière battante, les joints sous capot, les joints de coulisse pouvant être de type demi-coulisse intérieure, mono-feuillure ou de type « truck-style » (i.e. pour camions), les joints de double étanchéité, les joints de passage de roue ou encore les joints antisalissure.

Il est connu par le document EP-B1-1 093 902 au nom de la Demanderesse, ce document est considéré comme l'état de la technique le plus proche, de fabriquer une armature thermoplastique cintrable de section par exemple en U pour de tels profilés d'étanchéité, cette armature présentant une âme et deux ailes comportant chacune une succession de jambes symétriques séparées entre elles par des ajours. Ces ajours sont obtenus exclusivement par calandrage (i.e. sans opération de post-formage), par passage du matériau thermoplastique entre un galet mâle gravé suivant une empreinte en creux (i.e. définissant le « négatif » du profil d'armature à obtenir) et un galet femelle qui vient recouvrir tangentiellement ce galet mâle et qui est entraîné en co-rotation synchrone avec ce dernier.

Les armatures calandrées présentées dans ce document donnent des résultats satisfaisants. Cependant, l'expérience montre que ces armatures calandrées ne permettent pas toujours de conférer aux profilés les incorporant des valeurs de serrage suffisantes sur la feuillure, contrairement à un profilé avec armature métallique. Il est donc nécessaire soit d'augmenter l'épaisseur des jambes de l'armature, soit d'en modifier la géométrie. De plus, les profilés les incorporant peuvent présenter un aspect général en forme de « côtes de chien », i.e. un recouvrement inégal des ailes de l'armature par le matériau d'enrobage extrudé sur cette armature, pénalisant ainsi l'esthétique du profilé. Par ailleurs, le coût de la matière de recouvrement est élevé, et supérieur à celui de la matière d'armature.

Les documents EP-A1-0 418 116 et FR-A5-2 145 928 divulguent des armatures métalliques de section en U pour profilés d'étanchéité, dont les ailes présentent des découpes.

Un but de la présente invention est de proposer une armature thermoplastique cintrable de section transversale sensiblement en U, en particulier pour pince de profilé d'étanchéité ou d'enjoliveur de véhicule automobile, l'armature présentant une âme et deux ailes, chaque aile comportant sur sa longueur une succession de jambes par exemple sensiblement triangulaires ou trapézoïdales qui sont séparées entre elles par des ajours, armature qui permette principalement de procurer un fonctionnement général optimisé en montage/ démontage de la pince du profilé l'incorporant sur une feuillure de cadre, suivant des rayons de courbure plus ou moins sévères et qui permette également de remédier à l'inconvénient précité de « côtes de chiens ».

A cet effet, une armature selon l'invention est telle que sur au moins une partie de sa longueur, chaque jambe présente latéralement (i.e. sur sa paroi latérale vue dans la direction longitudinale de l'armature) une géométrie asymétrique et une aire supérieure à celle de chaque ajour adjacent.

Selon l'invention, lesdites ailes comportent une succession de paires desdites jambes asymétriques qui, au sein de chaque paire, sont formées latéralement en regard l'une de l'autre et présentent chacune une extrémité libre de largeur minimale qui est alors décalée par rapport à un plan transversal de cette paire situé à égale distance de la naissance desdits ajours entourant chaque jambe. Selon l'invention, chaque jambe asymétrique présente sensiblement une forme de dent de scie comprenant deux bords de dent qui présentent chacun un profil droit ou incurvé et qui se rejoignent en ladite extrémité libre de forme pointue ou arrondie, de sorte que ladite au moins une partie d'armature soit sensiblement en forme de denture de scie dont les dents sont inclinées d'un même côté. On notera que ces jambes formant cette espèce de denture de scie peuvent présenter une inclinaison constante ou bien évolutive (i.e. progressive, soit de plus en plus prononcée dans un sens de l'armature).

On notera que cette géométrie particulière des jambes asymétriques et de ces ajours « interstitiels » procure une aptitude améliorée au cintrage du profilé incorporant cette armature, du fait que l'enrobage souple remplissant ces ajours, qui est présent en quantité croissante proportionnellement à sa hauteur par rapport à la fibre neutre du profilé, s'allonge plus facilement, permettant au profilé de suivre un rayon de courbure plus petit (par « fibre neutre », on entend de manière connue la ligne ou le plan fictif longitudinal du profilé ne présentant aucune déformation de type compression ou extension lorsque ce profilé suit un rayon de courbure lors de son cintrage).

Avantageusement, chaque jambe asymétrique peut présenter sensiblement une forme de virgule dont l'un desdits bords de dent est incurvé de manière convexe et dont l'autre bord de dent est sensiblement droit ou légèrement incurvé de manière concave. En d'autres termes, les ajours interstitiels adjacents à chacune de ces jambes asymétriques peuvent alors être délimités par des bords beaucoup plus rapprochés que dans l'art antérieur, ce qui minimise encore les défauts d'aspect de type « côtes de chien » en accentuant encore davantage les avantages précités.

Selon un autre aspect de l'invention, tout ou partie desdites jambes, incluant optionnellement lesdites jambes latéralement asymétriques, peuvent être chacune effilées avec une largeur longitudinale et/ou une épaisseur transversale continûment décroissante(s) vers l'extrémité libre de la jambe correspondante.

En d'autres termes, chacune desdites jambes latéralement asymétriques peut être en outre effilée vers son extrémité libre :
(i) latéralement (i.e. avec une largeur décroissante), ou bien
(ii) transversalement (i.e. avec une épaisseur décroissante), ou encore
(iii) tant latéralement que transversalement (i.e. avec une largeur et une épaisseur toutes deux décroissantes).

Cette forme effilée de tout ou partie des jambes peut également en variante caractériser des jambes latéralement symétriques que peut comporter une armature selon l'invention en plus desdites jambes latéralement asymétriques, avec également pour ces jambes symétriques (qui sont par exemple sensiblement en forme de triangle ou de trapèze isocèles) les trois possibilités (i), (ii) et (iii) précitées.

On notera que cette géométrie latéralement asymétrique et/ou effilée (latéralement et/ou transversalement) des ailes d'armature selon l'invention permet que la pince en U du profilé incorporant cette armature recouverte du matériau souple d'enrobage, présente un fonctionnement amélioré lors du montage/ démontage de la pince (i.e. de son « agrafage/ dégrafage » sur/ de la feuillure du cadre), par une optimisation de sa raideur. En particulier, cette géométrie latéralement et/ou transversalement effilée des jambes implique que le matériau thermoplastique rigide qui est utilisé pour l'armature peut être présent en plus grande quantité (i.e. selon une masse plus élevée) que dans les armatures de l'art antérieur dans les zones proches de l'âme, où se situent après enrobage les lèvres de maintien sur le support du profilé, ce qui permet un serrage optimisé de sa pince en U sur ce support, et que ce même matériau thermoplastique rigide est présent en moins grande quantité lorsque l'on s'éloigne de l'âme où le besoin de serrage est moindre (puisque l'enrobage dans ces zones s'accompagne de lèvres de stabilisation).

On notera également que cette géométrie effilée en largeur et/ou en épaisseur des jambes de chaque aile de l'armature par rapport aux ajours formant ces jambes, associée à une aire réduite de chacun de ces ajours en comparaison de celle de chaque jambe, permet une entrée moins saccadée de l'armature thermoplastique rigide dans l'outillage d'enrobage par du matériau souple, et donc de minimiser les défauts d'aspect précités de type « côtes de chien » pour le profilé. Ces ajours sont donc de surface latérale et/ou transversale inversement effilée(s) à l'opposé de l'extrémité libre de ces jambes effilées (i.e. vers l'âme de l'armature), et ils sont destinés à être comblés par le matériau d'enrobage.

Selon une autre caractéristique de l'invention, lesdits ajours peuvent prendre naissance à une même hauteur le long de chacune desdites ailes, de préférence sensiblement à la jonction entre chaque aile et ladite âme, laquelle est pleine ou ajourée.

Selon une autre caractéristique de l'invention, ladite âme peut être ajourée en présentant une succession de lumières transversales formées en quinconce par rapport auxdits ajours, l'une au moins desdites lumières transversales se prolongeant optionnellement sur les deux jambes respectives desdites ailes qui sont formées en regard de cette lumière.

On notera que cet agencement en quinconce des lumières de l'âme - et éventuellement des jambes - par rapport aux ajours des jambes, qui se traduit ainsi par un centrage latéral de chaque lumière en regard de la paire de jambes en regard, permet de conférer une souplesse accrue à l'armature lors de la prise de rayons.

Selon un autre aspect de l'invention, ladite armature peut être extrudée, de sorte que lesdits ajours et lesdites jambes soient directement venus d'extrusion.

Avantageusement, ladite armature peut être réalisée en au moins un matériau thermoplastique rigide apte à être extrudé et présentant un module d'Young compris entre 1000 MPa et 10000 MPa en fonction des charges renforçantes utilisées, et de préférence compris entre 2000 MPa et 6000 MPa. Encore plus avantageusement, ce matériau thermoplastique peut être à base d'au moins un polymère thermoplastique (TP) qui est par exemple choisi dans le groupe constitué par les polypropylènes, les polyamides, les chlorures de polyvinyle (PVC), les polyméthacrylates de méthyle (PMMA), les terpolymères acrylonitrile-butadiène-styrène (ABS) et leurs mélanges, et qui est de préférence un polypropylène renforcé par une charge choisie dans le groupe non exhaustif constitué par le talc, le chanvre, le bois, le liège, les fibres de verre et leurs mélanges, la fonction de cette charge étant d'augmenter la rigidité du matériau de base.

On notera que d'autres polymères thermoplastiques sont utilisables pour réaliser une armature selon l'invention, et que le choix de ces polymères répond en particulier à un compromis entre le coût et la rigidité des matériaux en question.

Un profilé d'étanchéité ou d'enjoliveur de véhicule automobile selon l'invention comporte une armature thermoplastique telle que définie ci-dessus et au moins un enrobage élastomère plus souple que cette armature et extrudé sur cette dernière.

Selon un exemple de réalisation de l'invention, ce profilé comporte :
- une partie formant pince qui est renforcée par ladite armature pour son montage sur une feuillure de cadre et dont l'enrobage est réalisé en au moins un matériau élastomère souple qui est compatible avec celui de l'armature, et qui est de préférence à base d'un caoutchouc tel qu'un EPDM, ou d'un élastomère thermoplastique (TPE) tel qu'un élastomère thermoplastique styrénique (TPS, e.g. un SEBS) ou un vulcanisat thermoplastique (TPV, e.g. du « Santoprene », du « Vegaprene ») ou d'autres TPE présentant des propriétés similaires de module à 100 % d'allongement et de résistance à la rupture, une lèvre d'étanchéité pouvant prolonger cette partie formant pince en s'étendant en regard de l'une desdites ailes, et
- une partie d'étanchéité souple et déformable tubulaire ou en forme de lèvre, qui est réalisée en au moins un matériau élastomère (par exemple un TPE tel qu'un TPV ou un TPS ou bien un caoutchouc tel qu'un EPDM) de préférence cellulaire et qui prolonge cette partie formant pince en l'autre aile du U.

Un procédé de fabrication selon l'invention d'une armature telle que définie ci-dessus, comprend une extrusion d'au moins un matériau thermoplastique à travers une filière de profil en U formée entre une tête d'extrudeuse et un organe de réception du matériau quittant cette tête qui est muni d'une empreinte en creux conçue pour former directement ladite âme, lesdits ajours et lesdites jambes, de manière que ce matériau ainsi extrudé recouvre progressivement cet organe de réception, puis une séparation de ce matériau d'avec l'organe de réception.

On notera que ce procédé d'extrusion ne doit pas être confondu avec un calandrage, qui par définition implique un passage de matière entre deux galets ou cylindres tournants.

Selon une autre caractéristique de l'invention, ladite filière peut avantageusement être formée par une tête d'extrudeuse fixe recouvrant tangentiellement la périphérie d'une roue qui forme ledit organe de réception et qui tourne autour de son axe de manière que sa périphérie pénètre à l'intérieur de cette tête pour que le matériau extrudé recouvre progressivement cette périphérie de roue lors de sa rotation, laquelle périphérie présente, d'une part, deux flancs périphériques radiaux présentant respectivement deux empreintes en creux de dentures formant lesdites jambes et lesdits ajours lors de leur recouvrement par ledit matériau et, d'autre part, un sommet périphérique circonférentiel présentant une empreinte en creux formant ladite âme lors de son recouvrement.

En variante, ladite filière peut être formée par une tête d'extrudeuse fixe recouvrant tangentiellement la périphérie d'une chenille ou d'un tapis roulant qui forme ledit organe de réception et dont la cinématique comprend une succession de mouvements de translation et de rotation autour de deux axes, de manière que la périphérie de cette chenille ou de ce tapis pénètre à l'intérieur de cette tête pour que le matériau extrudé recouvre progressivement cette périphérie lors de sa cinématique, laquelle périphérie présente, d'une part, deux flancs périphériques radiaux présentant respectivement deux empreintes en creux de dentures formant lesdites jambes et lesdits ajours lors de leur recouvrement par ledit matériau et, d'autre part, un sommet périphérique présentant une empreinte en creux formant ladite âme lors de son recouvrement.

On notera que l'on pourrait utiliser à titre d'organe de réception un autre dispositif techniquement équivalent à la roue, au tapis roulant ou à la chenille précités, étant entendu que la géométrie de l'armature ainsi extrudée peut être aménagée en fonction du choix de cet organe.

Avantageusement, ce procédé selon l'invention est totalement exempt d'étape de post-formage dudit au moins un matériau thermoplastique extrudé, telle qu'une étape de découpe, de sciage ou d'entaillage.

On notera que la géométrie plus ou moins asymétrique (e.g. en forme de virgule) des jambes de l'armature ainsi extrudée selon l'invention permet en outre d'améliorer la séparation et donc l'extraction de cette armature vis-à-vis de la périphérie de la roue. Plus précisément, une roue de petit diamètre implique une extraction sur une courte distance incurvée et donc une forte sollicitation tangentielle de la partie inférieure des jambes du U avec par conséquent une géométrie fortement asymétrique, alors qu'une roue de plus grand diamètre (jusqu'à l'extrapolation conduisant à une chenille ou un tapis convoyeur), implique une sollicitation moindre sur les jambes et donc une géométrie de jambe pouvant être à la limite globalement symétrique (e.g. triangulaire ou trapézoïdale) par rapport à son extrémité libre. Le choix de l'organe de réception est donc étroitement lié au produit recherché, étant précisé qu'il influence aussi le coût de l'installation.

D'autres caractéristiques, avantages et détails de la présente invention ressortiront à la lecture de la description suivante d'un exemple de réalisation de l'invention, donné à titre illustratif et non limitatif, ladite description étant réalisée en référence avec les dessins joints, parmi lesquels :
la figure 1 est une vue en coupe transversale d'un profilé d'étanchéité de type joint de porte pour véhicule automobile incorporant dans sa pince une armature thermoplastique selon l'invention,
la figure 2 est un diagramme à blocs montrant les principales étapes d'un procédé de fabrication d'un profilé selon l'invention tel que celui de la figure 1 avec extrusion de l'armature thermoplastique et sur-extrusion d'un enrobage en recouvrement de cette armature,
la figure 3 est une vue schématique partielle de dessus et en perspective, d'une armature thermoplastique selon un exemple de l'invention incluant des jambes asymétriques,
la figure 4 est une vue schématique partielle de dessous et en perspective de l'armature de la figure 3,
la figure 5 est une vue latérale schématique partielle de l'armature à jambes asymétriques des figures 3 et 4,
la figure 6 est une vue latérale schématique partielle montrant un exemple de jambes symétriques pouvant être incluses dans une armature selon l'invention en plus de jambes asymétriques comme celles de la figure 5,
la figure 7 est une vue latérale schématique partielle montrant d'autres jambes symétriques pouvant être incluses dans une armature selon une variante de l'invention en plus des jambes asymétriques de la figure 5,
la figure 8 est une vue partielle en section transversale dans le plan VIII-VIII de la figure 7 d'une telle jambe symétrique pouvant être incluse dans une armature selon l'invention,
la figure 9 est une vue latérale schématique d'une tête d'extrudeuse recevant une roue tournante munie d'une empreinte périphérique en creux et coopérant avec cette tête pour former une filière d'extrusion d'une armature selon l'invention,
la figure 10 est une vue schématique partielle en perspective latérale montrant en agrandissement la rotation de la roue de la figure 9 à l'intérieur de la tête d'extrudeuse,
la figure 11 est une vue schématique partielle de face et en perspective, montrant en agrandissement la géométrie de la filière d'extrusion de l'armature illustrée aux figures 9 et 10, qui est définie par l'intervalle existant entre l'intérieur de la tête d'extrudeuse et l'empreinte de la roue,
la figure 12 est une vue latérale schématique de la tête d'extrudeuse recevant la roue tournante selon les figures 9 à 11, l'empreinte périphérique de cette roue étant progressivement recouverte du matériau extrudé destiné à former l'armature, et
la figure 13 est une vue latérale partielle illustrant la séparation d'une armature extrudée selon l'invention d'avec l'empreinte périphérique d'une telle roue tournante.

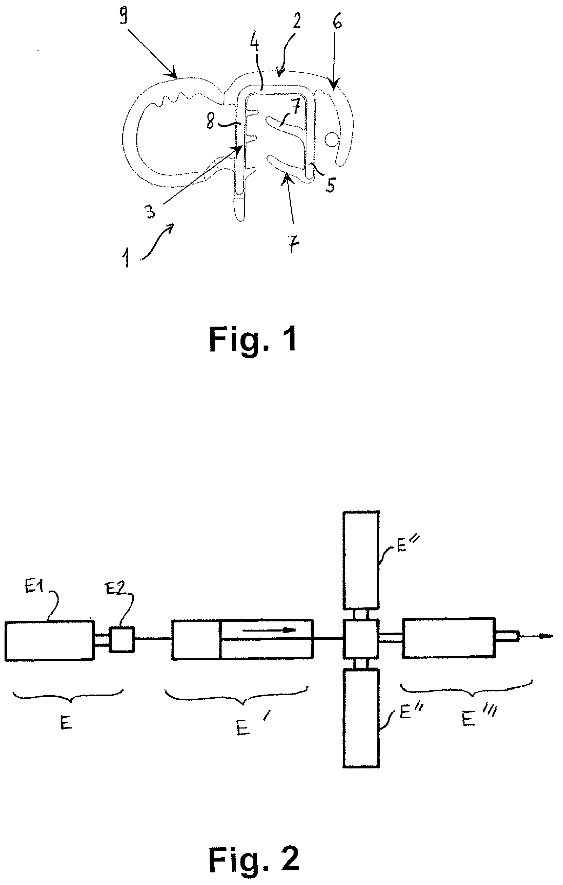

Le profilé d'étanchéité 1 illustré à la figure 1 est destiné à former un joint d'ouvrant latéral de véhicule automobile assurant l'étanchéité entre cet ouvrant et la carrosserie du véhicule, et il comprend de manière connue :
- une pince 2 en un matériau élastomère souple (par exemple un TPE tel qu'un TPS ou un TPV, ou bien un caoutchouc tel qu'un EPDM) qui est renforcée par une armature thermoplastique rigide 3 en U (par exemple à base d'un polypropylène) pour son montage sur une feuillure de cadre et qui se prolonge à la jonction entre l'âme 4 et une aile 5 du U par une lèvre « cosmétique » 6 réalisée également en un matériau thermoplastique souple et rabattue le long de cette aile 5, cette pince comportant sur les faces internes respectives de ses ailes 5 et 8 des lèvres d'agrafage 7 sur la feuillure, et
- un tube d'étanchéité 9 (remplaçé avantageusement par une lèvre dans certains profilés) qui prolonge la pince 2 à la jonction entre l'âme 4 et l'autre aile 8 du U et qui est réalisé en un matériau élastomère souple et déformable (par exemple cellulaire, tel qu'un TPE par exemple de type TPS ou TPV ou un caoutchouc tel qu'un EPDM).

Les profilés d'étanchéité 1 ou d'embellissement selon l'invention, tels que ceux de la figure 1, sont avantageusement obtenus par un procédé d'extrusion de l'armature thermoplastique rigide 3 avec une sur-extrusion du reste du profilé 1 constituant l'enrobage souple de l'armature 3, comme illustré à la figure 2. On y distingue une étape initiale d'extrusion E de l'armature 3 (réalisée dans une tête d'extrudeuse E1 munie d'une filière E2, dont la structure et le fonctionnement seront décrits ci-après), suivie d'une étape de refroidissement E' de l'armature 3 ainsi extrudée, puis une sur-extrusion E" d'un enrobage élastomère souple au contact de cette armature 3 extrudée refroidie, et enfin un refroidissement E'" du profilé extrudé 1 ainsi obtenu.

En complément, l'on peut envisager une amélioration de la tenue de l'enrobage sur l'armature 3 en intégrant au procédé de fabrication, avant insertion dans le dispositif d'enrobage, une étape de réactivation de la surface de l'armature 3 (e.g. par chauffage, traitement plasma ou un bombardement électrique de surface de type « Corona » par exemple), ou bien une enduction (e.g. par pulvérisation, goutte à goutte étalé au pinceau) ou encore une sur-extrusion d'une couche intermédiaire compatibilisante entre le(s) matériau(x) de l'armature 3 et le(s) matériau(x) d'enrobage.

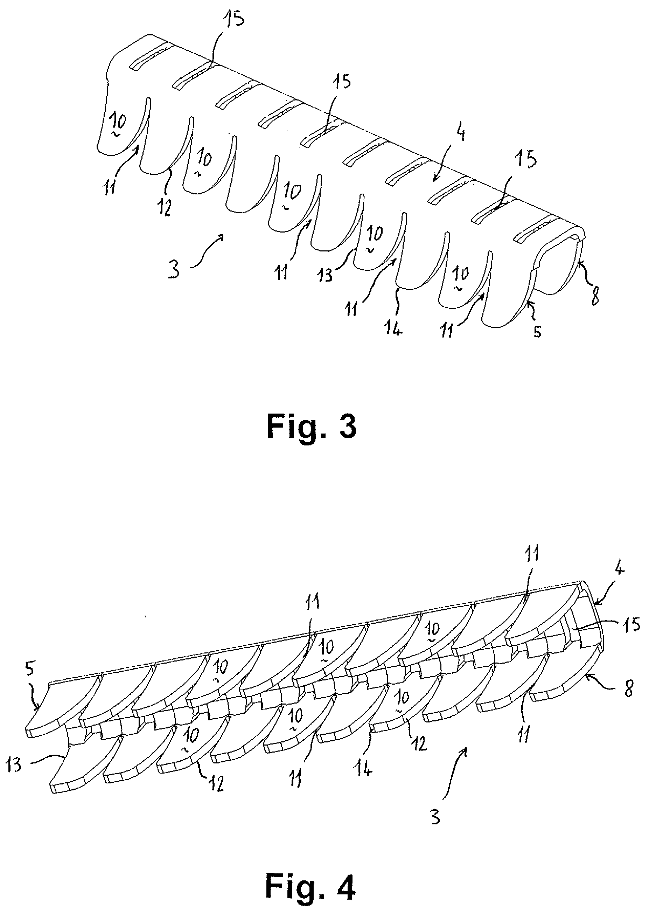

L'armature thermoplastique 3 illustrée aux figures 3 et 4 est ainsi obtenue exclusivement par extrusion d'un matériau thermoplastique rigide, tel qu'un matériau à base d'un polypropylène, à titre préférentiel.

On peut par exemple utiliser un polypropylène renforcé par du talc selon une fraction massique de talc pouvant varier de 0 à 50 % et de préférence comprise entre 30 % et 40 %. A titre non limitatif, on peut utiliser 30 % de talc avec un module d'Young obtenu pour l'armature 3 d'environ 2300 MPa, ou bien 40 % de talc avec dans ce cas un module d'Young pour l'armature 3 d'environ 4000 MPa.

En variante, on peut avantageusement utiliser un polypropylène renforcé par des fibres de verre courtes et/ou longues selon une fraction massique de fibres de verre pouvant varier de 0 à 60 % et de préférence comprise entre 30 % et 40 %, avec un module d'Young obtenu pour l'armature 3 d'environ 5900 MPa pour 30 % de fibres de verre longues et d'environ 6600 MPa pour 30 % de fibres de verre courtes.

Selon d'autres variantes de l'invention, on peut utiliser un polypropylène renforcé par des fibres courtes et/ou longues de chanvre, selon une fraction massique de chanvre pouvant varier de 0 à 40 %, ou bien renforcé par un mélange de talc et de fibres de verre, à titre non limitatif.

Comme visible aux figures 3 à 5, une armature 3 selon l'invention présente une âme 4 et deux ailes 5 et 8 comportant respectivement sur leurs longueurs une succession de paires de jambes asymétriques 10 latéralement en regard l'une de l'autre qui sont séparées entre elles par des ajours 11 et qui sont profilées vers les bords libres des ailes 5 et 8 en présentant sensiblement dans cet exemple une forme de virgule aux bords 12 et 13 continûment incurvés à partir de la naissance des ajours 11 adjacents (ces bords 12 et 13 étant de préférence respectivement convexe et concave) et à l'extrémité libre 14 arrondie. Ces ajours 11 prennent naissance à une même hauteur le long de chaque aile 5, 8 à la jonction entre celle-ci et l'âme 4, laquelle est ajourée en présentant dans cet exemple sur la longueur de l'armature 3 une succession de lumières transversales 15 parallèles entre elles qui sont formées en quinconce par rapport aux ajours 11.

On voit que les ajours 11 présentent chacun une aire nettement inférieure à celle de chaque jambe 10 adjacente, de sorte que ces ajours 11 forment dans cet exemple de fines entailles interstitielles aux bords incurvés entre les jambes 10 en forme de virgules, avec les avantages susmentionnés.

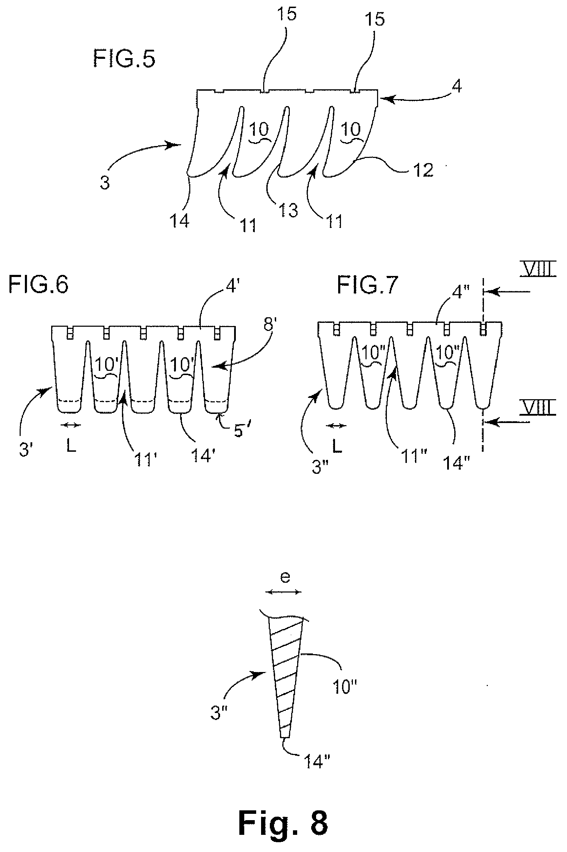

On a représenté à la figure 6 une armature 3' selon l'invention dont les deux ailes 5' et 8' sont de hauteurs différentes à partir de l'âme 4' et dont certaines paires de jambes 10' de ces deux ailes 5' et 8' ont leurs jambes 10' qui, vues latéralement, présentent chacune une géométrie symétrique, i.e. dans cet exemple sensiblement en forme de trapèze isocèle, contrairement aux jambes asymétriques 10 précitées (non visibles à la figure 6) également incluses dans cette armature 3'.

L'armature 3" selon la variante de la figure 7 se distingue uniquement de celle de la figure 6, en ce que ses deux ailes sont de même hauteur à partir de l'âme 4" et ont certaines paires de jambes 10" dont la géométrie symétrique se rapproche davantage de celle d'un triangle isocèle (i.e. d'un trapèze isocèle se terminant à son extrémité libre 14" par une petite base de largeur réduite par rapport à la base de chaque jambe 10").

Ces armatures 3' et 3" à jambes 10' et 10" symétriques sont ainsi caractérisées par une largeur L qui décroît continûment à partir des ajours 11' et 11" adjacents et vers leurs extrémités libres respectives 14' et 14" (étant précisé que les bords de ces jambes 10', 10" pourraient être en variante non pas obliques mais incurvés).

En outre et comme illustré à la figure 8, l'épaisseur transversale e de chacune de ces jambes symétriques 10' et 10" peut être avantageusement décroissante vers leurs extrémités libres 14', 14", ou bien être choisie constante. Comme indiqué précédemment, on notera que cette épaisseur e décroissante pourrait en variante caractériser les jambes 10 latéralement asymétriques et/ou des jambes symétriques de largeur L constante (non illustrées) incluses dans une armature selon l'invention.

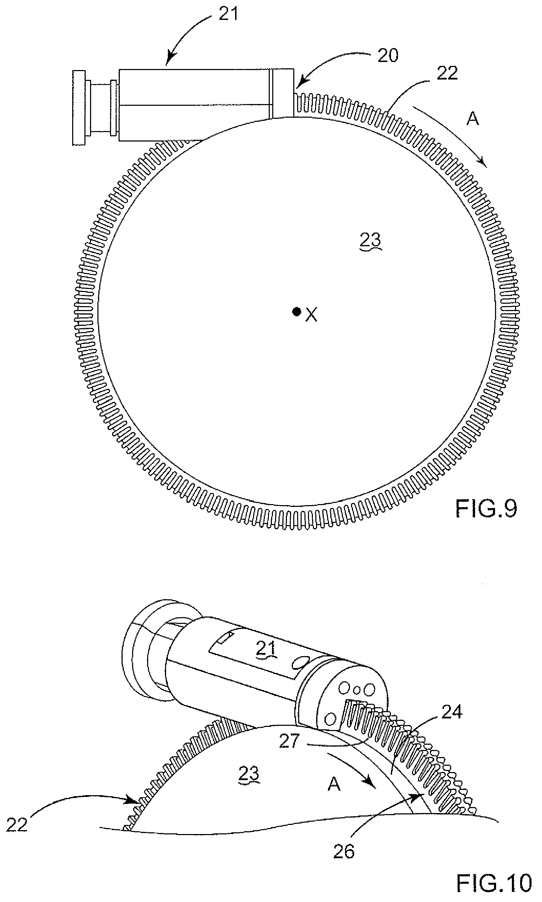

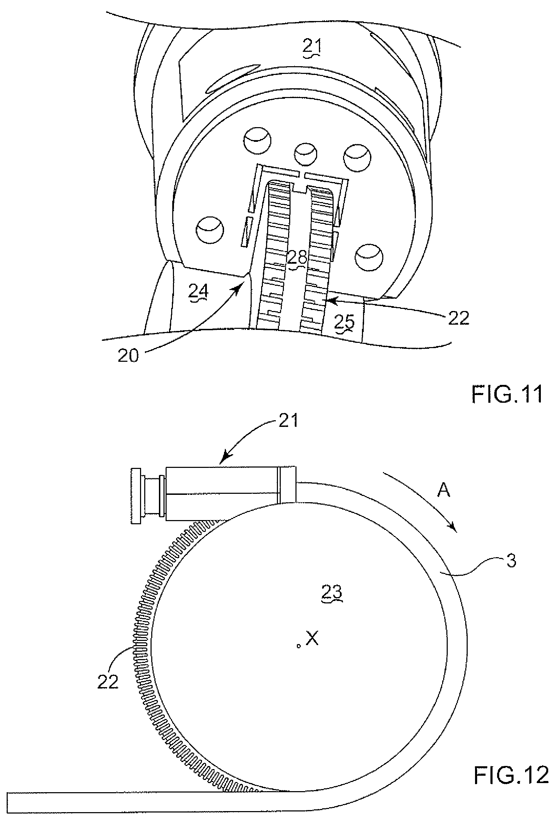

Comme cela va être à présent décrit en référence aux figures 9 à 13, ces ajours 11 et ces jambes 10 sont exclusivement venus d'extrusion (i.e. sans calandrage et sans opérations ultérieures de découpe, d'entaillage ou de sciage, contrairement à l'art antérieur). Ces figures et en particulier les figures 10 et 11 montrent schématiquement la géométrie de la filière d'extrusion 20 de profil en U qui est utilisée pour obtenir une armature 3 selon l'invention, qui est visible en cours d'extrusion à la figure 12.

Cette filière 20 est formée par une tête d'extrudeuse 21 fixe recouvrant tangentiellement la périphérie 22 d'une roue 23, laquelle est entraînée en rotation autour de son axe de symétrie X dans le sens de la flèche A et est destinée à recevoir en sa périphérie 22 le matériau thermoplastique (e.g. un polypropylène renforcé) quittant la tête 21, de manière que cette périphérie 22 pénètre à l'intérieur de la tête 21 puis en sorte recouverte par le matériau extrudé 3. Plus précisément et comme visible à la figure 11, la périphérie de roue 22 est reliée au reste de la roue 23 par deux épaulements circonférentiels 24 et 25 qui sont symétriques l'un de l'autre par rapport à cette périphérie 22 et qui sont surmontés par l'extérieur de la tête d'extrudeuse 21.

La périphérie de roue 22 est munie d'empreintes en creux conçues pour former directement l'armature 3, et cette périphérie 22 comprend plus précisément :
- deux flancs périphériques radiaux 26 présentant respectivement deux empreintes identiques de dentures 27 destinées à former les jambes 10 et les ajours 11 lors de leur recouvrement, et
- un sommet périphérique circonférentiel 28 présentant une empreinte en creux destinée à former l'âme 4, lors de son recouvrement.

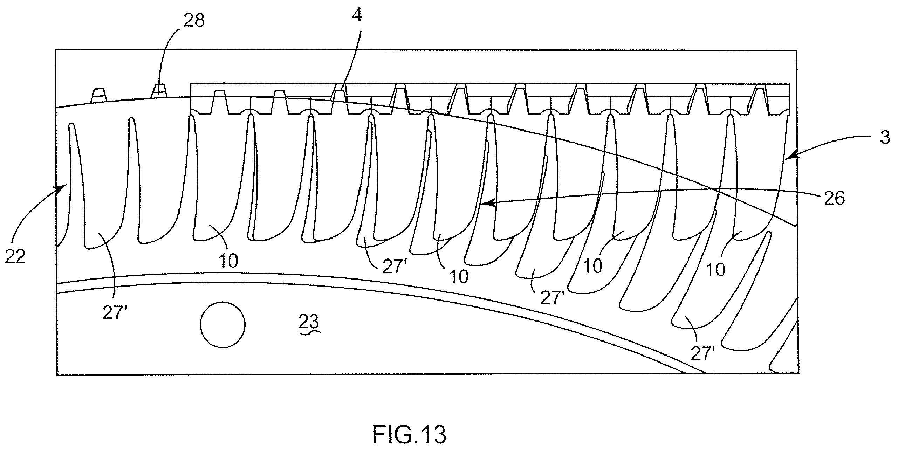

A des fins de simplification des figures 9, 10 et 12, on n'a pas représenté sur ces figures la forme précisément asymétrique des dentures en creux 27 formées sur les flancs radiaux 26 de la périphérie de roue 22, étant entendu que cette forme asymétrique est par exemple celle illustrée à la figure 13, avec des empreintes 27' en forme de virgules conçues pour former une armature 3 telle que celle des figures 3 à 5. Comme indiqué plus haut et visible à cette figure 13, on notera que cette géométrie asymétrique des jambes 10 présente notamment l'avantage d'améliorer la séparation de cette armature extrudée 3 vis-à-vis de la périphérie de roue 22, en comparaison d'armatures présentant des jambes globalement triangulaires ou trapézoïdales mais symétriques par rapport à leur extrémité libre (i.e. des jambes en forme de triangle isocèle à sommet pointu ou arrondi ou plat).

## Revendications

1. Armature thermoplastique cintrable (3) de section transversale sensiblement en U, en particulier pour profilé d'étanchéité (1) ou d'enjoliveur de véhicule automobile, l'armature présentant une âme (4) et deux ailes (5 et 8), chaque aile comportant sur sa longueur une succession de jambes (10) qui sont séparées entre elles par des ajours (11), **caractérisée en ce que** sur au moins une partie de la longueur de l'armature, chaque jambe présente latéralement une géométrie asymétrique et une aire supérieure à celle de chaque ajour adjacent, **en ce que** lesdites ailes (5 et 8) comportent une succession de paires desdites jambes asymétriques (10) qui, au sein de chaque paire, sont formées latéralement en regard l'une de l'autre et présentent chacune une extrémité libre (14) de largeur minimale qui est décalée par rapport à un plan transversal de cette paire situé à égale distance de la naissance desdits ajours (11) entourant chaque jambe, et **en ce que** chaque jambe asymétrique (10) présente sensiblement une forme de dent de scie comprenant deux bords de dent (12 et 13) qui présentent chacun un profil droit ou incurvé et qui se rejoignent en ladite extrémité libre (14) de forme pointue ou arrondie, de sorte que ladite au moins une partie d'armature soit sensiblement en forme de denture de scie dont les dents sont inclinées d'un même côté.

2. Armature (3) selon la revendication 1, **caractérisée en ce que** chaque jambe asymétrique (10) présente sensiblement une forme de virgule dont l'un desdits bords de dent (12) est incurvé de manière convexe et dont l'autre bord de dent (13) est sensiblement droit ou incurvé de manière concave.

3. Armature (3) selon une des revendications précédentes, **caractérisée en ce que** tout ou partie desdites jambes, incluant optionnellement lesdites jambes latéralement asymétriques (10), sont chacune effilées avec une largeur longitudinale (L) et/ou une épaisseur transversale (e) continûment décroissante(s) vers l'extrémité libre de la jambe correspondante.

4. Armature (3) selon une des revendications précédentes, **caractérisée en ce que** lesdits ajours (11) prennent naissance à une même hauteur le long de chacune desdites ailes (5 et 8), de préférence sensiblement à la jonction entre chaque aile et ladite âme (4), laquelle est pleine ou ajourée.

5. Armature (3) selon les revendications 1 et 4, **caractérisée en ce que** ladite âme (4) est ajourée en présentant une succession de lumières transversales (15) formées en quinconce par rapport auxdits ajours (11), l'une au moins desdites lumières transversales se prolongeant optionnellement sur les deux jambes (10) respectives desdites ailes (5 et 8) qui sont formées en regard de cette lumière.

6. Armature (3) selon une des revendications précédentes, **caractérisée en ce qu'**elle est extrudée, lesdits ajours (11) et lesdites jambes (10) étant directement venus d'extrusion.

7. Armature (3) selon une des revendications précédentes, **caractérisée en ce qu'**elle est réalisée en au moins un matériau thermoplastique apte à être extrudé et présentant un module d'Young compris entre 1000 MPa et 10000 MPa et de préférence compris entre 2000 MPa et 6000 MPa, et de préférence **en ce que** ledit matériau thermoplastique est à base d'au moins un polymère thermoplastique (TP) qui est choisi dans le groupe constitué par les polypropylènes, les polyamides, les chlorures de polyvinyle (PVC), les polyméthacrylates de méthyle (PMMA), les terpolymères acrylonitrile-butadiène-styrène (ABS) et leurs mélanges, et qui est de préférence un polypropylène renforcé par une charge choisie dans le groupe constitué par le talc, le chanvre, les fibres de verre et leurs mélanges.

8. Profilé d'étanchéité (1) ou d'enjoliveur de véhicule automobile comportant une armature thermoplastique (3) et au moins un enrobage élastomère de préférence à base d'au moins un élastomère thermoplastique (TPE) ou d'au moins un caoutchouc tel qu'un EPDM, plus souple que cette armature et extrudé sur cette dernière, **caractérisé en ce que** l'armature est telle que définie à l'une des revendications précédentes.

9. Profilé (1) selon la revendication 8, **caractérisé en ce qu'**il comporte essentiellement :
- une partie formant pince (2) qui est renforcée par ladite armature (3) pour son montage sur une feuillure de cadre et dont l'enrobage est réalisé en un matériau compatible avec celui de l'armature, et qui est de préférence à base d'au moins un élastomère thermoplastique (TPE) tel qu'un élastomère thermoplastique styrénique (TPS) ou un vulcanisat thermoplastique (TPV), et
- une partie d'étanchéité souple et déformable (9) tubulaire ou en forme de lèvre, qui est réalisée en un matériau élastomère de préférence cellulaire et qui prolonge cette partie formant pince en une aile (8) du U.

10. Procédé de fabrication d'une armature (3) selon une des revendications 1 à 7, **caractérisé en ce qu'**il comprend une extrusion d'au moins un matériau thermoplastique à travers une filière (20) de profil en U formée entre une tête d'extrudeuse (21) et un organe de réception (23) du matériau quittant cette tête qui est muni d'une empreinte en creux (26, 28) conçue pour former directement ladite âme (4), lesdits ajours (11) et lesdites jambes (10), de manière que ce matériau ainsi extrudé recouvre progressivement cet organe de réception, puis une séparation de ce matériau d'avec l'organe de réception.

11. Procédé selon la revendication 10, **caractérisé en ce que** ladite filière (20) est formée par une tête d'extrudeuse (21) fixe recouvrant tangentiellement la périphérie (22) d'une roue (23) qui forme ledit organe de réception et qui tourne autour de son axe (X) de manière que sa périphérie pénètre à l'intérieur de cette tête pour que le matériau extrudé recouvre progressivement cette périphérie de roue lors de sa rotation, laquelle périphérie présente, d'une part, deux flancs périphériques radiaux (26) présentant respectivement deux empreintes en creux de dentures (27') formant lesdites jambes (10) et lesdits ajours (11) lors de leur recouvrement par ledit matériau et, d'autre part, un sommet périphérique circonférentiel (28) présentant une empreinte en creux formant ladite âme (4) lors de son recouvrement.

12. Procédé selon la revendication 10, **caractérisé en ce que** ladite filière est formée par une tête d'extrudeuse fixe recouvrant tangentiellement la périphérie d'une chenille ou d'un tapis roulant qui forme ledit organe de réception et dont la cinématique comprend une succession de mouvements de translation et de rotation autour de deux axes, de manière que la périphérie de cette chenille ou de ce tapis pénètre à l'intérieur de cette tête pour que le matériau extrudé recouvre progressivement cette périphérie lors de sa cinématique, laquelle périphérie présente, d'une part, deux flancs périphériques radiaux présentant respectivement deux empreintes en creux de dentures (27') formant lesdites jambes (10) et lesdits ajours (11) lors de leur recouvrement par ledit matériau et, d'autre part, un sommet périphérique (28) présentant une empreinte en creux formant ladite âme (4) lors de son recouvrement.

13. Procédé selon une des revendications 10 à 12, **caractérisé en ce qu'**il est exempt d'étape de post-formage dudit au moins un matériau thermoplastique extrudé, telle qu'une étape de découpe, de sciage, d'entaillage ou de calandrage.

## Patentansprüche

1. Biegbare thermoplastische Armierung (3) mit im Wesentlichen U-förmigem Querschnitt, insbesondere für KFZ-Dichtung (1) oder -Zierleiste, wobei die Armierung einen Kern (4) und zwei Flügel (5 und 8) aufweist, wobei jeder Flügel auf seiner Länge eine Folge von Beinen (10) umfasst, die durch Durchbrüche (11) voneinander getrennt sind, **dadurch gekennzeichnet, dass** über zumindest einen Teil der Länge der Armierung jedes Bein seitlich eine asymmetrische Geometrie und eine Fläche aufweist, die größer ist als diejenige von jedem benachbarten Durchbruch, dadurch, dass die Flügel (5 und 8) eine Folge von Paaren der asymmetrischen Beine (10) umfassen, die in jedem Paar seitlich einander gegenüberstehend gebildet sind und jeweils ein freies Ende (14) mit minimaler Breite aufweisen, das in Bezug zu einer Querebene dieses Paares, das sich in gleichem Abstand von dem Ursprung der Durchbrüche (11) befindet, die jedes Bein umgeben, versetzt ist, und dadurch, dass jedes asymmetrische Bein (10) im Wesentlichen eine Sägezahnform aufweist, die zwei Zahnkanten (12 und 13) umfasst, die jeweils ein gerades oder gekrümmtes Profil aufweisen und sich in dem freien Ende (14) mit spitzer oder abgerundeter Form zusammenfügen, derart, dass der mindestens eine Armierungsteil im Wesentlichen die Form einer Sägezahnung aufweist, deren Zähne auf eine gleiche Seite geneigt sind.

2. Armierung (3) nach Anspruch 1, **dadurch gekennzeichnet, dass** jedes asymmetrische Bein (10) im Wesentlichen die Form eines Kommas aufweist, von dem die eine der Zahnkanten (12) auf konvexe Art und Weise gekrümmt ist und von dem die andere Zahnkante (13) im Wesentlichen gerade oder auf konkave Art und Weise gekrümmt ist.

3. Armierung (3) nach einem der vorhergehenden Ansprüche, **dadurch gekennzeichnet, dass** halle oder ein Teil der Beine, die wahlweise die seitlich asymmetrischen Beine (10) umfassen, jeweils mit einer Längsbreite (L) und/oder einer Querdicke (e) verjüngt sind, die in Richtung des freien Endes des entsprechenden Beines kontinuierlich abnimmt/abnehmen.

4. Armierung (3) nach einem der vorhergehenden Ansprüche, **dadurch gekennzeichnet, dass** die Durchbrüche (11) ihren Ursprung in einer gleichen Höhe entlang von jedem der Flügel (5 und 8), vorzugsweise im Wesentlichen an der Verbindungsstelle zwischen jedem Flügel und dem Kern (4), haben, der voll oder durchbrochen ist.

5. Armierung (3) nach Anspruch 1 und 4, **dadurch gekennzeichnet, dass** der Kern (4) durchbrochen ist, indem er eine Folge von Querschlitzen (15) aufweist, die versetzt zu den Durchbrüchen (11) gebildet sind, wobei mindestens einer der Querschlitze sich wahlweise auf die zwei entsprechenden Beine (10) der Flügel (5 und 8) ausdehnt, die diesem Schlitz gegenüberstehend gebildet sind.

6. Armierung (3) nach einem der vorhergehenden Ansprüche, **dadurch gekennzeichnet, dass** sie extrudiert wird, wobei die Durchbrüche (11) und die Beine (10) direkt extrusionsgeformt werden.

7. Armierung (3) nach einem der vorhergehenden Ansprüche, **dadurch gekennzeichnet, dass** sie aus mindestens einem thermoplastischen Material ausgeführt ist, das geeignet ist, extrudiert zu werden und ein Elastizitätsmodul aufweist, das zwischen 1000 MPa und 10000 MPa enthalten ist und vorzugsweise zwischen 2000 MPa und 6000 MPa enthalten ist, und dadurch, dass das thermoplastische Material vorzugsweise auf Basis von mindestens einem thermoplastischen Polymer (TP) hergestellt ist, das in der Gruppe ausgewählt ist, die aus Polypropylenen, Polyamiden, Polyvinylchloriden (PVC), Polymethylmethacrylaten (PMMA), Acrylnitril-Butadien-Styrol-Terpolymeren (ABS) und ihren Mischungen besteht, und das vorzugsweise ein Polypropylen ist, das durch einen Füllstoff verstärkt ist, der in der Gruppe gewählt ist, die aus Talk, Hanf, Glasfasern und ihren Mischungen besteht.

8. KFZ-Dichtung (1) oder -Zierleiste, die eine thermoplastische Armierung (3) und mindestens eine Elastomerumhüllung, vorzugsweise auf Basis von mindestens einem thermoplastischen Elastomer (TPE) oder von mindestens einem Kautschuk, wie beispielsweise einem EPDM, umfasst, die biegsamer ist als diese Armierung und auf dieser letzteren extrudiert wird, **dadurch gekennzeichnet, dass** die Armierung derart ist, wie in einem der vorhergehenden Ansprüche definiert.

9. Dichtung (1) nach Anspruch 8, **dadurch gekennzeichnet, dass** sie im Wesentlichen Folgendes umfasst:
- einen Teil, der eine Klemme (2) bildet, die durch die Armierung (3) für ihre Anbringung auf einer Rahmenfalz verstärkt ist und deren Umhüllung aus einem Material ausgeführt ist, das mit demjenigen der Armierung verträglich ist, und die vorzugsweise auf Basis von mindestens einem thermoplastischen Elastomer (TPE) hergestellt ist, wie beispielsweise ein thermoplastisches Elastomer auf Styrolbasis (TPS) oder ein thermoplastisches Vulkanisat (TPV), und
- einen biegsamen und verformbaren Dichtungsteil (9) mit der Form eines Rohres oder einer Lippe, der aus einem vorzugsweise zelligen Elastomermaterial ausgeführt ist und der diesen Teil, der eine Klemme bildet, in einem Flügel (8) des U verlängert.

10. Verfahren zur Fertigung einer Armierung (3) nach einem der Ansprüche 1 bis 7, **dadurch gekennzeichnet, dass** es eine Extrusion von mindestens einem thermoplastischen Material durch eine Düse (20) mit U-förmigem Profil, die zwischen einem Extruderkopf (21) und einem Organ zur Aufnahme (23) des Materials, das diesen Kopf verlässt, gebildet ist, der mit einer hohlen Prägung (26, 28) versehen ist, die gestaltet ist, um direkt den Kern (4), die Durchbrüche (11) und die Beine (10) zu bilden, derart, dass das so extrudierte Material dieses Aufnahmeorgan allmählich bedeckt, und dann eine Trennung dieses Materials von dem Aufnahmeorgan umfasst.

11. Verfahren nach Anspruch 10, **dadurch gekennzeichnet, dass** die Düse (20) durch einen festen Extruderkopf (21) gebildet ist, der den Umfang (22) eines Rades (23) tangential bedeckt, das das Aufnahmeorgan bildet und das sich derart um seine Achse (X) dreht, dass sein Umfang in das Innere dieses Kopfs eindringt, damit das extrudierte Material diesen Radumfang bei seiner Drehung allmählich bedeckt, wobei der Umfang einerseits zwei radiale umlaufende Flanken (26), die zwei hohle Prägungen von Zahnungen (27'), die bei ihrer Bedeckung durch das Material die Beine (10) und die Durchbrüche (11) bilden, und andererseits eine umlaufende Umfangsspitze (28) aufweist, die eine hohle Prägung aufweist, die bei ihrer Bedeckung den Kern (4) bildet.

12. Verfahren nach Anspruch 10, **dadurch gekennzeichnet, dass** die Düse durch einen festen Extruderkopf gebildet ist, die den Umfang einer Raupenkette oder eines Laufbandes tangential bedeckt, die/das das Aufnahmeorgan bildet und deren/dessen Kinematik eine Folge von Translations- und Drehbewegungen um zwei Achsen umfasst, derart, dass der Umfang dieser Raupenkette oder dieses Bandes in das Innere dieses Kopfes eindringt, damit das extrudierte Material diesen Umfang bei seiner Kinematik allmählich bedeckt, wobei der Umfang einerseits zwei radiale umlaufende Flanken, die jeweils zwei hohle Prägungen von Zahnungen (27') aufweisen, die die Beine (10) und die Durchbrüche (11) bei ihrer Bedeckung durch das Material bilden, und andererseits eine umlaufende Spitze (28) aufweist, die eine hohle Prägung aufweist, die bei ihrer Bedeckung den Kern (4) bildet.

13. Verfahren nach einem der Ansprüche 10 bis 12, **dadurch gekennzeichnet, dass** es von dem Schritt des Nachformens des mindestens einen extrudierten thermoplastischen Materials, wie beispielsweise einem Schneide-, Säge-, Einschneide- oder Kalandrierungsschritt, befreit ist.

## Claims

1. A bendable thermoplastic reinforcement (3) of substantially U-shaped cross section, in particular for a profiled seal (1) or profiled molding of a motor vehicle, the reinforcement having a central portion (4) and two arms (5 and 8), each arm comprising over its length a series of limbs (10) which are separated from one another by slots (11), **characterized in that** over at least one part of the length of the reinforcement, each limb has laterally an asymmetrical geometry and an area greater than that of each adjacent slot, **in that** said arms (5 and 8) comprise a series of pairs of said asymmetrical limbs (10) which, within each pair, are formed laterally opposite one another and which each have a free end (14) of minimum width which is offset relative to a transverse plane of this pair located at an equal distance from the start of said slots (11) surrounding each limb, and **in that** each asymmetrical limb (10) has substantially the shape of a saw-tooth comprising two tooth edges (12 and 13) which each have a straight or curved profile and which are joined at said free end (14) of pointed or rounded shape, such that said at least one part of the reinforcement is substantially in the form of a saw-toothing, the teeth thereof being inclined on the same side.

2. The reinforcement (3) as claimed in claim 1, **characterized in that** each asymmetrical limb (10) has substantially the shape of a comma, one of said tooth edges (12) thereof being curved in a convex manner and the other tooth edge (13) thereof being substantially straight or curved in a concave manner.

3. The reinforcement (3) as claimed in one of the preceding claims, **characterized in that** all or part of said limbs, optionally including said laterally asymmetrical limbs (10), are each tapered with a longitudinal width (L) and/or a transverse thickness (e) continuously decreasing toward the free end of the corresponding limb.

4. The reinforcement (3) as claimed in one of the preceding claims, **characterized in that** said slots (11) start at the same height along each of said arms (5 and 8), preferably substantially at the junction between each arm and said central portion (4) which is solid or slotted.

5. The reinforcement (3) as claimed in claims 1 and 4, **characterized in that** said central portion (4) is slotted, having a series of transverse openings (15) formed in a staggered arrangement relative to said slots (11), at least one of said transverse openings optionally extending over the two respective limbs (10) of said arms (5 and 8) which are formed opposite said opening.

6. The reinforcement (3) as claimed in one of the preceding claims, **characterized in that** it is extruded, said slots (11) and said limbs (10) being directly extruded.

7. The reinforcement (3) as claimed in one of the preceding claims, **characterized in that** it is produced in at least one thermoplastic material capable of being extruded and having a Young's modulus of between 1000 MPa and 10 000 MPa and preferably between 2000 MPa and 6000 MPa, and preferably **in that** said thermoplastic material is based on at least one thermoplastic polymer (TP) which is selected from the group consisting of polypropylenes, polyamides, polyvinyl chlorides (PVC) polymethyl-methacrylates (PMMA), acrylonitrile butadiene-styrene (ABS) terpolymers and their composites, which is preferably a polypropylene reinforced by a filler, selected from the group consisting of talc, hemp, glass fibers and their composites.

8. A profiled seal (1) or profiled molding in a motor vehicle comprising a thermoplastic reinforcement (3) and at least one elastomeric coating preferably based on at least one thermoplastic elastomer (TPE) or at least one rubber such as an EPDM, more flexible than said reinforcement and extruded thereon, **characterized in that** the reinforcement is as defined in one of the preceding claims.

9. The profiled element (1) as claimed in claim 8, **characterized in that** it essentially comprises:
- a part forming a grip (2) which is reinforced by said reinforcement (3) for the mounting thereof on a rebate of a frame and of which the coating is produced in a material which is compatible with that of the reinforcement, and which is preferably based on at least one thermoplastic elastomer (TPE) such as a styrene thermoplastic elastomer (TPS) or a thermoplastic vulcanizate (TPV), and
- a flexible and deformable seal part (9) which is tubular or in the form of a lip which is produced in an elastomeric material which is preferably cellular and which extends said part forming the grip into one arm (8) of the U-shape.

10. A method for the production of a reinforcement (3) as claimed in one of claims 1 to 7, **characterized in that** it comprises an extrusion of at least one thermoplastic material via a die (20) of U-shaped profile, formed between an extruder head (21) and a receiving member (23) for the material being discharged from said head, which receiving member is provided with a hollow cavity (26, 28) designed to form directly said central portion (4), said slots (11) and said limbs (10), so that said material thus extruded progressively covers said receiving member, followed by a separation of said material from the receiving member.

11. The method as claimed in claim 10, **characterized in that** said die (20) is formed by a fixed extruder head (21) tangentially covering the periphery (22) of a wheel (23) which forms said receiving member and which rotates about its axis (X) so that its periphery penetrates inside said head so that the extruded material progressively covers said wheel periphery during its rotation, which periphery has, firstly, two peripheral radial flanks (26) respectively having a hollow tooth cavity (27') forming said limbs (10) and said slots (11) when covered by said material and, secondly, a circumferential peripheral top portion (28) having a hollow cavity forming said central portion (4) when covered.

12. The method as claimed in claim 10, **characterized in that** said die is formed by a fixed extruder head tangentially covering the periphery of a track or of a conveyor belt which forms said receiving member and of which the kinematics comprises a series of movements in translation and rotation about two axes, so that the periphery of said track or of said conveyor belt penetrates inside said head so that the extruded material progressively covers said periphery during its kinematic movement, which periphery has, firstly, two peripheral radial flanks respectively having two hollow tooth cavities (27') forming said limbs (10), and said slots (11) when covered by said material and, secondly, a peripheral top portion (28) having a hollow cavity forming said central portion (4) when covered.

13. The method as claimed in one of claims 10 to 12, **characterized in that** it is without a post-forming step of said at least one extruded thermoplastic material, such as a cutting, sawing, notching or calendering step.
